# EUROPÄISCHE PATENTSCHRIFT

(11) **EP 1 700 643 B1**
(45) Veröffentlichungstag und Bekanntmachung des Hinweises auf die Patenterteilung: **01.02.2012**
(21) Anmeldenummer: 06003566.4
(22) Anmeldetag: 22.02.2006
(51) Int. Cl.: B08B 9/20, B65G 47/71

(54) **Behälteraufgabe**
Device for feeding containers
Dispositif d'alimentation de récipients

(30) Priorität: 12.03.2005 DE 102005011456
(43) Veröffentlichungstag der Anmeldung: 13.09.2006
(73) Patentinhaber: KHS GmbH, 44143 Dortmund (DE)
(72) Erfinder: Jendrichowski, Klaus, 59439 Holzwickede (DE)

(56) Entgegenhaltungen:
- EP-A- 0 530 756
- WO-A-98/21128
- DE-A1- 2 614 711
- DE-A1- 3 006 490
- DE-A1- 3 926 735
- DE-A1- 19 751 967
- DE-B- 1 052 844
- DE-B- 1 105 298
- DE-B- 1 296 039

## Beschreibung

Die Erfindung bezieht sich auf eine Behälteraufgabe gemäß Oberbegriff Patentanspruch 1,

Behälteraufgaben für Reinigungsmaschinen für Flaschen oder dergleichen Behälter sind bekannt und dienen dazu, die Flaschen eines über einen Zuförderer zugeführten mehrspurigen Flaschenstrom auf die größere Maschinen- oder Arbeitsbreite der Reinigungsmaschine zu verteilen und so dem Einlauf bzw. den dort vorgesehenen Aufgabe- oder Mitnehmerelementen zuzuführen. Die Flaschen werden hierfür über den Zuförderer der Transportfläche der Behälteraufgabe zugeführt. Die Transportfläche der Behälteraufgabe wird von mehreren parallelen Trensportelementen, teilweise z.B. auch von den Transportbändern des Zuförderers gebildet. Sämtliche Transportelemente der Transportfläche bewegen sich dabei In einer ersten Transportrichtung. Durch ein schräg zu dieser Transportrichtung verlaufendes Geländer werden die Flaschen durch Staudruck und Drängeln in einer zweiten Transportrichtung senkrecht zur ersten Transportrichtung über ein sich entlang des Einlaufs der Reinigungsmaschine erstreckendes Überschubblech an diesen Einlauf bzw. an die Aufgabe- oder Mitnehmerelemente, beispielsweise Mitnehmerscheiben oder -arme bewegt, und zwar durch Überschieben über das Überschubblech. Dieses Zuführen der Behälter bzw. Flaschen an den Einlass der Reinigungsmaschine erfolgt unter erheblichen Zwang und Druck sowie durch ein gleitendes, mit Reibung behaftetes Bewegen der Flaschen über das Überschubblech, was eine erhebliche Lärmentwicklung verursacht.

Bekannt wurde eine Vorrichtung nach der DE 39 26 735 C2. Entsprechend der technischen Lehre dieser Schrift ist vorgesehen, den so genannten Vortisch der Behälteraufgabe dadurch in verschiedene Bereiche aufzutellen, dass oberhalb der Transporffläche des Vortisches aus Blechen bestehende Bereiche gebildet werden. Des Weiteren ist gemäß der Lehre dieser Schrift vorgesehen, die In die einzelnen Bereiche gelangten Behälter durch weitere Unterteilungen in die einzelnen Gassen bzw. Flaschenreihen der Reinigungsmaschine zu führen, wobei die Längen dieser weiteren Unterteilungen derart gewählt sind, dass die Unterteilungen pfeilförmig in den Flaschenstrom ragen. Durch diese Vorgehensweise soll eine gleichmäßigere Verteilung der Behälter erreicht werden.

Eine vergleichbare Vorrichtung wurde ebenfalls durch die DE 1 105 29B vorgestellt.

Eine Behälteraufgabe gemäß dem Oberbegriff des Anspruchs 1 ist aus DE 1 052 844 bekannt. Dort werden auch bereits Transportelemente der Behälteraufgabe mit unterschiedlichen Geschwindigkeiten angegeben, die jedoch durch Kattenräder unterschiedlicher Durchmesser erzeugt werden.

Aufgabe der Erfindung ist es, eine Behälteraufgabe mit verbesserter Arbeitswelse bei hoher Betriebssicherheit aufzuzeigen. Zur Lösung dieser Aufgabe ist eine Behälteraufgabe entsprechend dem Patentanspruch 1 ausgebildet.

Weiterbildungen der Erfindung sind Gegenstand der Unteransprüche. Die Erfindung wird im Folgenden anhand der Figuren an einem Ausführungsbeispiel erläutert. Es zeigen:
- Fig. 1: in schematischer Teildarstellung und in Draufsicht eine Behälterreinigungsma- schine in Form einer Flaschenreinigungsmaschine, zusammen mit einer Be- hälteraufgabe in Form einer Flaschenaufgabe;
- Fig. 2: In perspektivischer Einzeldarstellung die Behälteraufgabe der Figur 1;
- Fig. 3: eine Darstellung wie Figur 1 bei einer weiteren möglichen Ausführungsform.

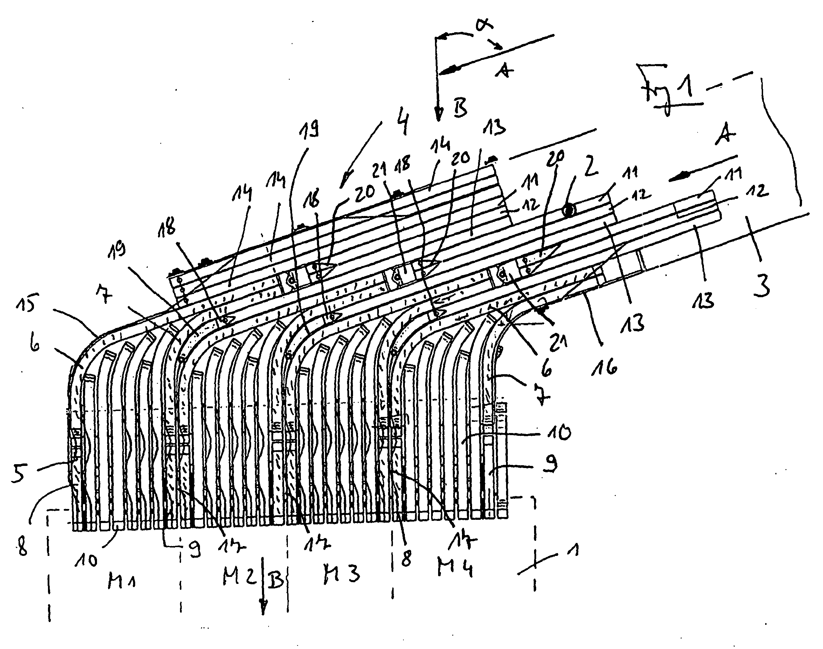

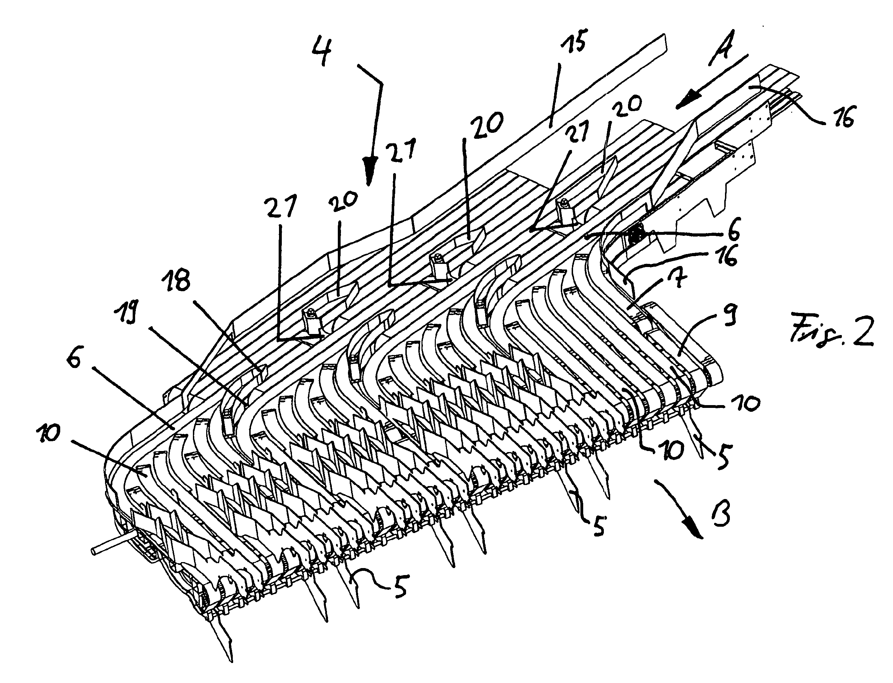

In den Figuren ist 1 eine Flaschenreinigungsmaschine üblicher Bauart, der die zu reinigenden Flaschen, von denen in der Figur 1 eine schematisch mit 2 angegeben ist, aufrecht stehend in einem breiten, mehrspurigen Flaschenstrom über einen in der Figur 1 schematisch mit 3 angedeuteten Zuförderer zugeführt werden, und zwar an eine in den Figuren 1 und 2 allgemein mit 4 bezeichnete Behälteraufgabe, über die die Flaschen 2 dann weiterhin aufrecht stehend in einer Transportrichtung B den nicht dargestellten maschinenseitigen Mitnehmer- oder Aufgabeelementen der Reinigungsmaschine 1, beispielsweise den Mitnehmerscheiben oder Mitnehmerarmen zugeführt werden, über welche die Flaschen 2 dann jeweils in Zellen von Flaschenkörben der Flaschenreinigungsmaschine 1 eingebracht werden, mit denen die Flaschen 2 zum Reinigen durch die verschiedenen Reinigungszonen der Flaschenreinigungsmaschine 1 bewegt werden, wie dies dem Fachmann bekannt ist.

Die beiden horizontalen Transportrichtungen A und B schließen bei der dargestellten Ausführungsform einen Winkel a etwas kleiner als 90° ein. Der Zuförderer 3 besteht aus mehreren, In den Figuren nicht dargestellten parallelen Transportelementen (Scharnierbandketten) sowie aus seitlichen Führungsgeländern und bildet eine horizontale oder annähernd horizontale Transportfläche für die Flaschen 2. Auch die Behälteraufgabe 4 besteht aus einer Vielzahl von, teilweise auch kurvengängigen Transportelemonten (Schamierbandketten) und bildet ebenfalls eine horizontale oder annähernd horizontale Transportfläche.

Eine Besonderheit der Behälteraufgabe 4 besteht darin, dass diese u.a. durch die Anordnung, die Lagerung, die Führung und den Antrieb ihrer Transportelemente modular aufgebaut ist und aus mehreren Zuführblöcken oder Modulen besteht, d.h. bei der dargestellten Ausführungsform vier Module M1 - M4 bildet, an denen die Flaschen 2 jeweils in einem mehrspurigen Flaschenstrom, d.h. bei der dargestellten Ausführungsform in einem achtspurigen Flaschenstrom den Aufgabeelementen 5 der Reinigungsmaschine 1 in der Transportrichtung B zugeführt werden.

Bei der in den Figuren 1 und 2 dargestellten Ausführungsform ist jedes Modul M1 - M4 von zwei kurvengängigen und in Bezug auf den mehrspurigen Flaschenstrom des betreffenden Moduls außenliegenden Transportelemente 6 und 7 gebildet, die mit ihren in Bezug auf die Transportrichtung vorderen Enden so zusagen den Einlauf des betreffenden Moduls M1 - M4 bilden und dort unmittelbar aneinander anschließen. Ausgehend von diesen vorderen Enden weisen die Transportelemente 6 und 7 dann in Transportrichtung einen zunehmend größeren Abstand voneinander auf und sind dabei zugleich auch kurvengängig ausgeführt, so dass jedes Transportelement 6 bzw. 7 ausgehend von seinem vorderen Ende einen geradlinigen Abschnitt, daran anschließend einen kurvengängigen Abschnitt, auf dem die Änderung der Transportrichtung erfolgt (von der Transportrichtung A in die Transportrichtung B), und daran anschließend einen geradlinigen Abschnitt bildet. An jedes Transportelement 6 bzw. 7 schließt sich jeweils zur Reinigungsmaschine 1 hin ein weiteres Transportelement 8 bzw. 9 an. Zwischen den Transportelementen 6 und 7 bzw. 8 und 9 sind bei jedem Modul M1 - M4 weitere Transportelemente 10 vorgesehen, und zwar derart, dass diese Transportelemente 10 mit ihren in Bezug auf die Transportrichtung vorderen Enden im Bereich der kurvengängigen Abschnitte der Transportelemente 6 und 7 liegen und vollständig oder nahezu vollständig die Transportfläche zwischen den äußeren Transportelementen 6/8 und 7/9 ausfüllen. Vorhandene Lücken zwischen den Transportelementen sind durch kleine Überschubbleche geschlossen.

Bei der dargestellten Ausführungsform sind den beiden Transportelementen 6 und 7 der Module M1 - M2 und M3 jeweils in Transportrichtung vorausgehend zwei geradlinige Transportelemente 11 bzw. 12 vorgesehen, die seitlich quer zur Transportrichtung dicht aneinander anschließen und von denen das Transportelement 11 in einer Linie mit dem geradlinigen, in Bezug auf die Transportrichtung vorderen Abschnitt des Transportelementes 6 und das Transportelement 12 in einer Linie mit dem geradlinigen, in Bezug auf die Transportrichtung vorderen Abschnitt des Transportelementes 7 des zugehörigen Moduls liegt.

Seitlich von dem vorderen Abschnitt des Transportelementes 7 sowie seitlich von dem zugehörigen Transportelement 12 der Module M1 - M3 ist jeweils ein geradliniges Transportelement 13 vorgesehen. Das in Bezug auf die Transportrichtung vordere Ende des Transportelementes 13 liegt auf einer Linie mit dem vorderen Ende des benachbarten Transportelementes 12. Weiterhin schließen an das Transportelement 13 quer zur Transportrichtung der vordere Abschnitt des Transportelementes 6 sowie das zugehörige Transportelement 11 des jeweils benachbarten Moduls M2 - M4 seitlich an.

Drei weitere, quer zur Transportrichtung seltlich aneinander anschließende Transportelemente 14 sind seitlich von dem vorderen, geradlinigen Abschnitt des Transportelementes 6 und von dem Transportelement 11 des Moduls M1 vorgesehen und bilden dort eine lokale Erweiterung der Transportfläche der Behälteraufgabe 4.

Die Transportelemente 11, 12 und 13 bilden drei Gruppen, in denen jeweils ein Transportelement 11, ein Transportelement 12 und ein Transportelement 13 seitlich an einander anschließen, die in jeder Gruppe mit ihren vorderen Enden auf einer gemeinsamen Linie quer zur Transportrichtung angeordnet sind und damit das vordere Ende jeder Gruppe bilden. Die vorderen Enden der Gruppen sind bei der Darstellung der Figur 1 in Bezug auf die Transportrichtung stufenförmig versetzt vorgesehen, so dass die verschiedenen Gruppen finger- oder stufenförmig in den Zuförderer 3 hineinreichen.

Durch den beschriebenen Verlauf der Transportelemente 6, 7, 8 und 9 ergibt sich im Bereich des Übergangs zwischen der Transportrichtung A und der Transportrichtung B an jedem Modul M1 - M4 eine trichterartige Vergrößerung der Gassenbreite der Förderstrecke, auf der die Flaschen 2 der Reinigungsmaschine 1 bzw. den Aufgabeelementen dieser Maschine zugeführt werden, so dass die Gesamtförderbreite der Behälteraufgabe 4 an der Reinigungsmaschine 1 um ein Vielfaches größer ist als die Förderbreite des Zuförderers 3. Sämtliche Transportelemente 6 - 14 sind vorzugsweise von Schamierbandketten gebildet.

Die Transportfläche der Behälteraufgabe 4 ist durch äußere Führungsgeländer 15 und 16 begrenzt. Weiterhin sind auch zwischen den einzelnen Modulen M1 - M4 und zwischen den einzelnen Spuren jedes Moduls M1 - M4 interne Führungsgeländer 17 vorgesehen, die jeweils ausgehend von einem Führungs- und Leltelement 18 Im Bereich der kurvengängigen Abschnitte der Transportelemente 6 und 7 bis an die Reinigungsmaschine 1 reichen. Die Führungs- und Leitelemente 18 sind jeweils an ein Transportelement 13 anschließend und zwischen dem kurvengängigen Abschnitt des Transpartelementes 7 eines Moduls M1 - M3 und dem kurvengängigen Abschnitt des Transportelementes 6 eines benachbarten Moduls M2 - M4 vorgesehen. Die Führungs- und Leitelemente 18 sind weiterhin schiffchenartig mit einer bezogen auf die Transportrichtung vorderen Spitze und einem anschließenden gekrümmten Abschnitt ausgebildet und jeweils mit Abstand über der Ebene der Transportfläche der Behälteraufgabe 4 derart angeordnet, dass jedes Führungs- und Leitelement 18 zwar mit seinem Umfang Führungs- und Leitflächen für die angeförderten Flaschen 2 bildet und diese in jeweils eines der benachbarten Module leitet, eventuelle auf der Transportfläche der Behälteraufgabe 4 mitgeförderte, liegende Flaschen 2 und/oder Fremdkörper, wie z.B. Scherben, Schmutzstoffe usw. aber unter dem Führungs- und Leitelement 18 hindurch und über die unter dem Führungs- und Leitelement 18 vorgesehene Öffnung 19 abgeführt bzw. ausgeschleust werden können.

Weitere Führungs- und Leitelemente 20 sind am Übergang zwischen den Transportelementen 11 und 12 den diesen folgenden Transportelementen 6 und 7 der Module M1 - M3 vorgesehen. Auch diese Führungs- und Leitelemente 20 sind wiederum von der Ebene der Transportfläche der Behälteraufgabe 4 soweit beabstandet, dass sie mit ihrem Umfang Leit- und Gleitflächen für die Flaschen 2 bilden, eventuelle auf der Transportfläche der Behälteraufgabe 4 mitgeförderte umgefallene Flaschen 2 und/oder Fremdkörper, wie z.B. Scherben, Schmutzstoffe usw. aber unter dem jewelligen Führungs- und Leitelement 20 hindurch und über die unter dem Führungs- und Leitelement 20 vorgesehene Öffnung 21 abgeführt bzw. ausgeschleust werden können.

Mit den Führungs- und Leitelementen 20, die jeweils in Transportrichtung vor den Führungs- und Leitelementen 19 vorgesehen sind, erfolgt eine erste Verteilung des Flaschenstromes auf die einzelnen Module M1 - M4.

Ein Vorteil der Behätteraufgabe 4 besteht u.a. darin, dass die einzelnen Module M1 - M4 bzw. deren Transportelementen je eine eigene Antriebseinheit aufweisen. Hierdurch ist es möglich, dass bei Unregelmäßigkeiten oder Störungen in einem Modul die Reinigungsmaschine 1 weiterlaufen kann, wobei lediglich das gestörte Modul M1 - M4 abgeschaltet wird, während die restlichen Module weiterlaufen. Durch diese überaus vorteilhafte Vorgehensweise wird es ermöglicht, die Effektivleistung einer erfindungsgemäßen Reinigungsmaschine beträchtlich zu steigern. Die Module M1 - M4 können einzeln montiert und demontiert und damit auch einzeln ausgetauscht werden. Durch den modularen Aufbau besteht ferner die Möglichkeit, unter Verwendung von standardisierten Modulen die Behälteraufgabe in besonders einfacher Weise an die jeweilige Arbeitsbreite der Reinigungsmaschine anzupassen.

Weiterhin besteht durch den modularen Aufbau und durch den eigenständigen Antrieb für jedes Modul die Möglichkeit, die Fördergeschwindigkeit der einzelnen Module Individuell so zu steuern, dass eine optimale Verteilung der Flaschen 2 auf die einzelnen Module M1 - M4 und damit eine möglichst optimale Leistung bei der Aufgabe der Flaschen an die Reinigungsmaschine 1 erreicht wird.

Ein weiterer wesentlicher Vorteil der Behälteraufgabe 4 besteht darin, dass die Übergabe der Flaschen 2 an die Reinigungsmaschine 1 über die bis an die Reinigungsmaschine 1 bzw. deren Aufgabeelemente 5 reichenden Transportelementen 6 - 10 der einzelnen Module M1 - M4 erfolgt und nicht, wie bei herkömmlichen Behälteraufgaben durch Überschieben über großflächige Gleitbleche unter Staudruck. Mit der erfindungsgemäßen Ausbildung wird somit eine erhebliche Reduzierung des Geräuschpegels erreicht. Hierzu trägt auch bei, dass die angeförderten Flaschen 2 durch die Führungs- und Leitelemente 18 und 20 in Verbindung mit der beschriebenen Ausbildung der Transportelementen, Insbesondere auch in Verbindung mit der kurvengängigen Ausbildung der Transportelemente 6, 7 und 10 weitestgehend ohne Zwänge und eher fließend in die von den einzelnen Modulen M1 - M4 gebildeten Transportgassen geleitet werden.

Ein weiterer überaus bedeutender Vorteil besteht darin, dass sowohl die einzelnen Module, als auch die einzeinen Transportelemente eines einzelnen Moduls mit unterschiedlichen z.B. auch variablen Geschwindigkeiten betrieben werden können, wodurch wo durch es ermöglicht wird, die Zuführung der Flaschen zu den einzelnen Mitnehmerelementen gleichmäßiger und lärmärmer auszuführen.

Ein weiterer wesentlicher Vorteil besteht darin, dass liegende Flaschen 2, Fremdkörper, z.B. Schmutz, Scherben usw. über die unter den Führungs- und Leitelementen 18 bzw. 20 gebildeten Öffnungen automatisch ausgeschleust werden.

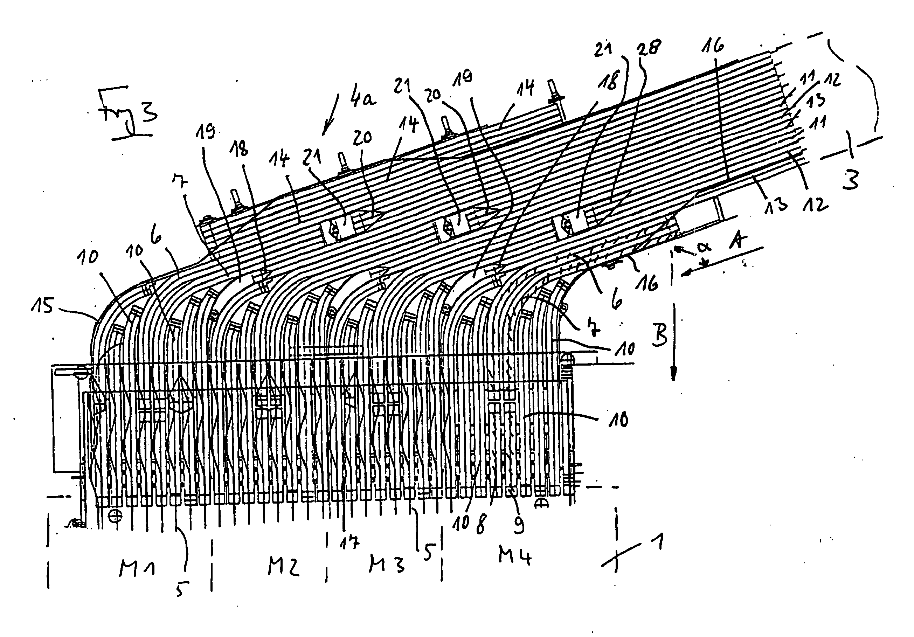

Die Figur 3 zeigt als weitere mögliche Ausführungsform eine Behälteraufgabe 4a, die sich von der Behälteraufgabe 4 im wesentlichen nur dadurch unterscheidet, dass die beiden Transportelemente 6 und 7 nicht die außenliegenden Transportelemente jedes Moduls M1 - M4 sind, sondern mittlere Transportelemente des betreffenden Moduls bilden und dass seitliche von den Transportelementen 6 und 7 die Transportelemente 10 vorgesehen sind, und zwar wiederum in Transportrichtung ausgehend von dem kurvengängigen Abschnitt der Transportelemente 6 und 7 bis an die Reinigungsmaschine 1. Weiterhin unterscheidet sich die Behälteraufgabe 4a von der Behalteraufgabe 4 dadurch, dass die Transportelemente 11, 12 und 13 jeweils unterschiedliche Längen derart aufweisen, dass die in Bezug auf die Transportrichtung vorderen Enden sämtlicher Transportelemente 11, 12 und 13 auf einer gemeinsamen Linie, senkrecht zur Transportrichtung liegen.

Die Erfindung wurde voranstehend an Ausführungsbelsplelen beschrieben. Es versteht sich, dass zahlreiche Änderungen sowie Abwandlungen möglich sind, ohne dass dadurch der die Erfindung tragende Erfindungsgedanke verlassen wird. So ist es beispielsweise möglich, dass anstelle der Transportelemente 6 - 14 zumindest teilweise auch andere angetriebene Transportelemente vorgesehen sind. So ist z.B. auch die Verwendung von z.B. ebenen, aus einem plattenförmigen Material bestehenden Elementen vorgesehen, welche beweglich gelagert und derart angetrieben sind, dass diese die Flaschen durch Mikrowürfe zu den Mitnahmeelementen der Reinigungsmaschine befördern. Anstatt der Mikrowurf-Antriebe können ebenfalls Vibrationsantriebe vorgesehen sein.

### Bezugezeichenliste

- 1: Reinigungsmaschine
- 2: Flasche
- 3: Zuförderer
- 4, 4a: Behälteraufgabe
- 5: Aufgabeelemente
- 6-14: Transportelement
- 15-16: äußere Führungsgeländer
- 17: innere Führungegeländer
- 18: Führungs- und Leitelement
- 19: Öffnung
- 20: Führungs- und Leitelement
- 21: Öffnung

- M1 - M4: Modul oder Zuführblock
- A: Transportrichtung auf dem Zuförderer 3
- B: Transportrichtung bei der Aufgabe der Flaschen 2 an die Reini- gungsmaschine
- α: Winkel zwischen der Transportrichtung A und B

## Patentansprüche

1. Behälteraufgabe zum Fördern von über einen Zuförderer (3) in einer ersten Transportrichtung (A) zugeführten Flaschen (2) oder dergleichen Behältern in einer zweiten, von der ersten unterschiedlichen Transportrichtung (B) an den Einlauf einer Behälterreinigungsmaschine (1) bzw. an dortige Behälterübernahmeelemente (5) bei gleichzeitigem Umformen des über den Zuförderer (3) zugeführten Behälterstromes in einen Behälterstrom größerer Breite auf einer angetriebene Transportelemente (6 -14) aufweisenden Transportfläche (4, 4a), wobei die die Transportfläche bildenden angetriebenen Transportelemente (6 - 14) der Behälteraufgabe (4, 4a) bis an den Einlauf der Reinigungsmaschine (1) reichen **dadurch gekennzeichnet, dass** dieTransportfläche in wenigstens zwei Zuführblöcke oder Module (M1 - M4) unterteilt ist, wobei die einzelnen Zuführblöcke oder Module (M1 -M4) je eine eigene Antriebseinheit aufweisen.

2. Behälteraufgabe nach Anspruch 1, **dadurch gekennzeichnet, dass** an der von den Transportelementen (6 - 14) gebildeten Transportfläche Führungs- und Leitelemente (18, 20) mit Führungs- und Leitflächen für die Behälter (2) vorgesehen sind, und dass mindestens eines dieser Führungs- und Leitelemente (18, 20) unterhalb seiner von der Ebene der Transportfläche beabstandeten Führungs- und Leitfläche wenigstens einen Durchlass zu wenigstens einer in der Transportfläche vorgesehenen Öffnung (19, 21) bildet, über die mit den Behältern (2) mitgeführte Fremdstoffe, wie beispielsweise Schmutz und/oder Scherben, aber auch liegende Behälter (2) ausgeschleust werden.

3. Behälteraufgabe nach Anspruch 1 oder 2, **dadurch gekennzeichnet, dass** an der von den Transportelementen (6 - 14) gebildeten Transportfläche Führungs- und Leitelemente (18, 20) mit Führungs- und Leitflächen für die Behälter (2) vorgesehen sind.

4. Behälteraufgabe nach einem der vorhergehenden Ansprüche, **dadurch gekennzeichnet, dass** die wenigstens zwei Module (M1 - M4) getrennt voneinander montierbar und/oder demontierbar sind.

5. Behälteraufgabe nach einem der vorhergehenden Ansprüche, **dadurch gekennzeichnet, dass** die wenigstens zwei Module (M1 - M4) einen identischen oder nahezu identischen Aufbau aufweisen.

6. Behälteraufgabe nach einem der vorhergehenden Ansprüche, **dadurch gekennzeichnet, dass** die wenigstens zwei Module (M1 - M4) hinsichtlich ihrer Förderwirkung und/oder -leistung individuell steuerbar sind, beispielsweise getrennt voneinander ein- oder ausschaltbar und/oder in ihrer Fördergeschwindigkeit individuell regelbar sind.

7. Behälteraufgabe nach einem der vorhergehenden Ansprüche, **dadurch gekennzeichnet, dass** die erste und die zweite Transportrichtung (A, B) einen Wickel (α) größer als 0° miteinander einschließen.

8. Behälteraufgabe nach Anspruch 6, **dadurch gekennzeichnet, dass** die erste und zweite Transportrichtung (A, B) einen Winkel (α) miteinander einschließen der kleiner oder gleich 90° ist.

9. Behälteraufgabe nach einem der vorhergehenden Ansprüche, **dadurch gekennzeichnet, dass** die Transportebene der Behälteraufgabe (4, 4a) von insgesamt vier Zuführblöcken oder Modulen (M1 - M4) gebildet Ist.

10. Behälteraufgabe nach einem der vorhergehenden Ansprüche, **dadurch gekennzeichnet, dass** die angetriebenen Transportelemente (6 - 14) zumindest teilweise von Transportbändern oder -ketten gebildet sind.

11. Behälteraufgabe nach einem der vorhergehenden Ansprüche, **dadurch gekennzeichnet, dass** die angetriebenen Transportelemente (6-14) zumindest teilweise solche mit einem Vibrationsantrieb sind.

12. Behälteraufgabe nach einem der vorhergehenden Ansprüche, **dadurch gekennzeichnet, dass** für die Module (M1 - M4) als eigenständige Bewegungsantriebe Elektromotoren, elektrische Vibrationsantriebe oder Mikrowurfantriebe vorgesehen sind.

13. Behälteraufgabe nach einem der vorhergehenden Ansprüche, **dadurch gekennzeichnet, dass** jedes Modul (M1 - M4) wenigstens ein erstes Transportelement (6, 7) aufweist, welches mit seinem bezogen auf die Transportrichtung vorderen Ende einen Einlauf des entsprechenden Moduls (M1 - M4) bildet und welches unmittelbar oder über wenigstens ein anschließendes angetriebenes Transportelement (8, 9) bis an den Einlauf der Reinigungsmaschine (1) reicht, und dass jedes Modul (M1 - M4) wenigstens ein zweites Transportelement (10) aufweist, welches quer zur Transportrichtung seitlich an das wenigstens eine erste Transportelement (6, 7) anschließt sowie bei mehreren zweiten Transportelementen (10) auch an einander anschließen.

14. Behälteraufgabe nach einem der vorhergehenden Ansprüche, **dadurch gekennzeichnet, dass** jedes Modul (M1 - M4) wenigstens zwei erste Transportelemente (6, 7) aufweist.

15. Behälteraufgabe nach einem der vorhergehenden Ansprüche, **dadurch gekennzeichnet, dass** das wenigstens eine erste Transportelement (6, 7) jedes Moduls (M1 - M4) kurvengängig, d.h. mit einem gekrümmten Abschnitt ausgebildet ist, und dass das in Transportrichtung hintere Ende des wenigstens einen zweiten Transportelementes (10) sich im Bereich des gekrümmten Abschnittes des zugehörigen ersten Transportelementes (6, 7) befindet.

16. Behälteraufgabe nach einem der vorhergehenden Ansprüche, **dadurch gekennzeichnet, dass** die beiden ersten Transportelemente (6, 7) an ihrem den Einlass des betreffenden Moduls bildenden Ende quer zur Transportrichtung einander seitlich benachbart liegen und mit zunehmendem Abstand von diesem Ende einen sich zunehmend vergrößernden Abstand voneinander aufweisen, und dass das wenigstens eine zweite Transportelement (10) jedes Moduls (M1 - M4) zwischen den beiden ersten Transportelementen (6, 7) und/oder zwischen an diese anschließenden weiteren Transportelementen (8, 9) angeordnet sind.

17. Behälteraufgabe nach einem der vorhergehenden Ansprüche, **dadurch gekennzeichnet, dass** Jedes Modul (M1 - M4) wenigstens zwei erste Transportelemente (6, 7) aufweist, die über ihre gesamte Länge oder einen Großteil dieser Länge quer zur Transportrichtung einander seitlich benachbart sind.

18. Behalteraufgabe nach einem der vorhergehenden Ansprüche, **dadurch gekennzeichnet, dass** beidseitig von dem wenigstens einen ersten Transportelement (6, 7) und/oder einem weiteren anschließenden Transportelement (8, 9) wenigstens ein zweites Transportelement (10) vorgesehen ist.

19. Behälteraufgabe nach einem der vorhergehenden Ansprüche, **dadurch gekennzeichnet, dass** die Transportfläche der Behälteraufgabe (4) im Anschlussbsreich zu dem vorausgehenden Zuförderer (3) von mehreren Gruppen einander benachbarter Transportelemente (11, 12, 13) gebildet ist, und dass das bezogen auf die Transportrichtung (A) vordere Ende dieser Gruppen in Transportrichtung von Gruppe zu Gruppe versetzt ist.

## Claims

1. Device for feeding containers, said device conveying bottles (2) or similar containers, which are supplied via a conveyor (3) in a first transport direction (A), in a second transport direction (B) that differs from the first one to the infeed of a container cleaning machine (1) or to local container transfer elements (5) while simultaneously converting the container flow supplied via the conveyor (3) to a container flow of greater width on a transportation surface (4, 4a) exhibiting driven transportation units (6-14), wherein the driven transportation units (6-14), that form the transportation surface, of the device for feeding containers (4, 4a) reach up to the infeed of the cleaning machine (1), **characterised in that** the transportation surface is divided into at least two feeding blocks or modules (M1-M4), wherein the individual feeding blocks or modules (M1-M4) each have a separate drive unit.

2. Device for feeding containers according to claim 1, **characterised in that** guide and control units (18, 20) with guide and control surfaces for the containers (2) are provided at the transportation surface formed by the transportation units (6-14) and that at least one of these guide and control units (18, 20), underneath its guide and control surface spaced from the level of the transportation surface, forms at least one passage to at least one opening (19, 21) provided in the transportation surface, via which foreign matter such as dirt and/or shards carried with the containers (2), but also lying containers (2), is/are transferred outward.

3. Device for feeding containers according to claim 1 or 2, **characterised in that** guide and control units (18, 20) with guide and control surfaces for the containers (2) are provided at the transportation surface formed by the transportation units(6-14).

4. Device for feeding containers according to one of the preceding claims, **characterised in that** the at least two modules (M1-M4) can be assembled and/or disassembled separate from one another.

5. Device for feeding containers according to one of the preceding claims, **characterised in that** the at least two modules (M1-M4) have an identical or near-identical structure.

6. Device for feeding containers according to one of the preceding claims, **characterised in that** the at least two modules (M1-M4), in terms of their conveying effect and/or conveying performance, can be individually controlled, for example separately switched on or off, and/or their conveying speeds can be individually controlled.

7. Device for feeding containers according to one of the preceding claims, **characterised in that** the first and second transport directions (A, B) enclose an angle (α) greater than 0°.

8. Device for feeding containers according to claim 6, **characterised in that** the first and second transport directions (A, B) enclose an angle (α) smaller than or equal to 90°.

9. Device for feeding containers according to one of the preceding claims, **characterised in that** the transportation level of the device for feeding containers (4, 4a) is formed by altogether four feeding blocks or modules (M1-M4).

10. Device for feeding containers according to one of the preceding claims, **characterised in that** the driven transportation units (6-14) are formed at least partly by transportation belts or transportation chains.

11. Device for feeding containers according to one of the preceding claims, **characterised in that** the driven transportation units (6 -14) at least partly are those with a vibration drive.

12. Device for feeding containers according to one of the preceding claims, **characterised in that** electric motors, electric vibration drives or micro throw drives are provided for the modules (M1-M4) as independent motion drives.

13. Device for feeding containers according to one of the preceding claims, **characterised in that** each module (M1-M4) has at least a first transportation element (6, 7) which, with its front end in respect of the transport direction, forms an infeed of the corresponding module (M1-M4) and which, directly or via at least one following driven transportation element (8, 9), reaches up to the infeed of the cleaning machine (1), and that each module (M1- M4) has at least a second transportation element (10) which, across the transport direction, laterally joins the at least one first transportation element (6, 7) and, in case of several second transportation units (10), also join [sic] one another.

14. Device for feeding containers according to one of the preceding claims, **characterised in that** each module (M1-M4) has at least two first transportation units (6, 7).

15. Device for feeding containers according to one of the preceding claims, **characterised in that** the at least one first transportation element (6, 7) of each module (M1-M4) is of curve-going design, i.e. with a curved section, and that the rear end, in transport direction, of the at least one second transportation element (10) is located in the area of the curved section of the associated first transportation element (6, 7).

16. Device for feeding containers according to one of the preceding claims, **characterised in that** the two first transportation units (6, 7), at their end forming the inlet of the module concerned, laterally adjoin one another across the transport direction and, with increasing distance from this end, have an increasingly greater distance from one another, and that the at least one second transportation element (10) of each module (M1-M4) are [sic] arranged between the two first transportation units (6, 7) and/or between further transportation units (8, 9) following them.

17. Device for feeding containers according to one of the preceding claims, **characterised in that** each module (M1-M4) has at least two first transportation units (6, 7) which, over their entire length or a large part of this length, are laterally adjacent to one another across the transport direction.

18. Device for feeding containers according to one of the preceding claims, **characterised in that** at least one second transportation element (10) is provided on both sides of the at least one first transportation element (6, 7) and/or a further following transportation element (8, 9).

19. Device for feeding containers according to one of the preceding claims, **characterised in that** the transportation surface of the device for feeding containers (4) in the connecting area to the preceding conveyor (3) is formed by several groups of adjacent transportation units (11, 12, 13) and that the front end, in respect of the transport direction (A), of these groups is offset in transport direction from group to group.

## Revendications

1. Dispositif d'alimentation de récipients pour transporter des bouteilles (2) ou récipients analogues, apportés au moyen d'un convoyeur d'alimentation (3) dans une première direction de transport (A), dans une deuxième direction de transport (B) différente de la première à l'entrée d'une machine (1) de nettoyage de récipients ou encore à des éléments (5) de prise en charge de récipients qui s'y trouvent, tout en transformant le flux de récipients apporté au moyen du convoyeur d'alimentation (3) en un flux de récipients de plus grande largeur sur une surface de transport (4, 4a) comportant des éléments de transport (6 - 14) entraînés, les éléments de transport (6 - 14) entraînés du dispositif (4, 4a) d'alimentation de récipients qui forment la surface de transport s'étendant jusqu'à l'entrée de la machine de nettoyage (1), **caractérisé en ce que** la surface de transport est divisée en au moins deux blocs d'alimentation ou modules (M1 - M4), les blocs d'alimentation ou modules (M1 - M4) individuels comportant chacun une propre unité d'entraînement.

2. Dispositif d'alimentation de récipients selon la revendication 1, **caractérisé en ce que** des éléments (18, 20) directeurs et de guidage, dotés de surfaces directrices et de guidage pour les récipients (2), sont prévus sur la surface de transport formée par les éléments de transport (6 - 14), et **en ce qu'**au moins un de ces éléments (18, 20) directeurs et de guidage forme, en dessous de sa surface directrice et de guidage distante du plan de la surface de transport, au moins un passage menant à au moins une ouverture (19, 21), prévue dans la surface de transport et par laquelle sont évacués les corps étrangers emportés avec les récipients (2), comme par exemple des saletés et/ou des éclats de verre, mais aussi des récipients (2) couchés.

3. Dispositif d'alimentation de récipients selon la revendication 1 ou 2, **caractérisé en ce que** des éléments (18, 20) directeurs et de guidage, dotés de surfaces directrices et de guidage pour les récipients (2), sont prévus sur la surface de transport formée par les éléments de transport (6 - 14),

4. Dispositif d'alimentation de récipients selon l'une quelconque des revendications précédentes, **caractérisé en ce que** les deux modules (M1 - M4) ou davantage peuvent être montés et/ou démontés séparément les uns des autres.

5. Dispositif d'alimentation de récipients selon l'une quelconque des revendications précédentes, **caractérisé en ce que** les deux modules (M1 - M4) ou davantage possèdent une structure identique ou quasiment identique.

6. Dispositif d'alimentation de récipients selon l'une quelconque des revendications précédentes, **caractérisé en ce que** les deux modules (M1 - M4) ou davantage peuvent être individuellement commandés quant à leur action et/ou leur performance de transport, par exemple peuvent être activés ou désactivés séparément les uns des autres, et/ou peuvent être individuellement régulés quant à leur vitesse de transport.

7. Dispositif d'alimentation de récipients selon l'une quelconque des revendications précédentes, **caractérisé en ce que** la première et la deuxième directions de transport (A, B) forment entre elles un angle (α) supérieur à 0°.

8. Dispositif d'alimentation de récipients selon la revendication 6, **caractérisé en ce que** la première et la deuxième directions de transport (A, B) forment entre elles un angle (α) inférieur ou égal à 90°.

9. Dispositif d'alimentation de récipients selon l'une quelconque des revendications précédentes, **caractérisé en ce que** le plan de transport du dispositif (4, 4a) d'alimentation de récipients est formé par un total de quatre blocs d'alimentation ou modules (M1 - M4).

10. Dispositif d'alimentation de récipients selon l'une quelconque des revendications précédentes, **caractérisé en ce que** les éléments de transport (6 - 14) entraînés sont formés au moins pour partie par des bandes transporteuses ou des chaînes de transport.

11. Dispositif d'alimentation de récipients selon l'une quelconque des revendications précédentes, **caractérisé en ce que** les éléments de transport (6 - 14) entraînés sont au moins pour partie des éléments de transport dotés d'un entraînement vibrant.

12. Dispositif d'alimentation de récipients selon l'une quelconque des revendications précédentes, **caractérisé en ce que** des moteurs électriques ou des entraînements électriques vibrants ou par micro-projections sont prévus comme entraînements en déplacement autonomes pour les modules (M1 - M4).

13. Dispositif d'alimentation de récipients selon l'une quelconque des revendications précédentes, **caractérisé en ce que** chaque module (M1 - M4) comporte au moins un premier élément de transport (6, 7) qui forme, par son extrémité avant relativement à la direction de transport, une entrée du module (M1 - M4) correspondant et qui s'étend, directement ou par l'intermédiaire d'au moins un élément de transport (8, 9) entraîné raccordé, jusqu'à l'entrée de la machine de nettoyage (1), et **en ce que** chaque module (M1 - M4) comporte au moins un deuxième élément de transport (10), qui se raccorde latéralement transversalement à la direction de transport au/aux premier(s) élément(s) de transport (6, 7), sachant qu'en présence de plusieurs deuxièmes éléments de transport (10), ceux-ci se raccordent également entre eux.

14. Dispositif d'alimentation de récipients selon l'une quelconque des revendications précédentes, **caractérisé en ce que** chaque module (M1 - M4) comporte au moins deux premiers éléments de transport (6, 7).

15. Dispositif d'alimentation de récipients selon l'une quelconque des revendications précédentes, **caractérisé en ce que** le premier élément de transport (6, 7) de chaque module (M1 - M4) est capable de négocier une courbe, c'est-à-dire est réalisé avec un tronçon courbe, et **en ce que** l'extrémité arrière, dans la direction de transport, du deuxième élément de transport (10) se trouve dans la région du tronçon courbe du premier élément de transport (6, 7) associé.

16. Dispositif d'alimentation de récipients selon l'une quelconque des revendications précédentes, **caractérisé en ce que** les deux premiers éléments de transport (6, 7) sont latéralement voisins l'un de l'autre transversalement à la direction de transport à leur extrémité formant l'entrée du module correspondant et possèdent une distance mutuelle augmentant progressivement plus l'on s'éloigne de cette extrémité, et **en ce que** le ou les deuxième(s) élément(s) de transport (10) de chaque module (M1 - M4) sont disposés entre les deux premiers éléments de transport (6, 7) et/ou entre les éléments de transport supplémentaires (8, 9) se raccordant à ceux-ci.

17. Dispositif d'alimentation de récipients selon l'une quelconque des revendications précédentes, **caractérisé en ce que** chaque module (M1 - M4) comporte au moins deux premiers éléments de transport (6, 7) qui sont latéralement voisins l'un de l'autre transversalement à la direction de transport sur toute leur longueur ou sur une grande partie de cette longueur.

18. Dispositif d'alimentation de récipients selon l'une quelconque des revendications précédentes, **caractérisé en ce qu'**au moins un deuxième élément de transport (10) est prévu de part et d'autre du ou des premiers éléments de transport (6, 7) et/ou d'un élément de transport supplémentaire (8, 9) s'y raccordant.

19. Dispositif d'alimentation de récipients selon l'une quelconque des revendications précédentes, **caractérisé en ce que** la surface de transport du dispositif (4) d'alimentation de récipients est formée, dans la zone de raccordement au convoyeur d'alimentation (3) précédent, par plusieurs groupes d'éléments de transport (11, 12, 13) voisins les uns des autres, et **en ce que** l'extrémité avant, relativement à la direction de transport (A), de ces groupes est décalée d'un groupe à l'autre dans la direction de transport.
